# EUROPÄISCHE PATENTSCHRIFT

(11) **EP 2 873 626 B1**
(45) Veröffentlichungstag und Bekanntmachung des Hinweises auf die Patenterteilung: **28.06.2017**
(21) Anmeldenummer: 14162794.3
(22) Anmeldetag: 31.03.2014
(51) Int. Cl.: B65D 25/20, B65D 81/38, B60R 7/04, F25D 3/08

(54) **Halteeinrichtung**
Holding device
Dispositif de fixation

(30) Priorität: 19.11.2013 DE 202013010374 U
(43) Veröffentlichungstag der Anmeldung: 20.05.2015
(73) Patentinhaber: IPV Inheidener Produktions- und Vertriebsgesellschaft mbH, 35410 Hungen-Inheiden (DE)
(72) Erfinder: Zorn, Manfred, 35410 Hungen-Inheiden (DE)
(74) Vertreter: Grosse Schumacher Knauer von Hirschhausen

(56) Entgegenhaltungen:
- CN-U- 202 480 916
- GB-A- 2 285 781
- US-A1- 2003 127 480

## Beschreibung

Die Erfindung betrifft eine Halteeinrichtung an einer tragbaren Kühl- oder Wärmebox zur Fixierung auf Autositzen, gemäß Oberbegriff des Anspruches 1.

Boxen dieser Art können zum Beispiel elektrisch betriebene Kühlboxen oder reine Isolierboxen mit aufklappbarem oder abnehmbarem oberen Deckel als Abdeckteil sein.

Es sind aber darunter auch kisten- oder kastenartige Behältnisse subsumiert, die zum Beispiel aufgrund eines nicht ausreichenden Stauraumes in einem Auto auf einem Autositz transportiert werden müssen.

In all diesen Fällen kann bisher nicht sicher genug die Halterung dieser Boxen oder Behältnisse, ob leer oder mit zu kühlendem Gut wie Lebensmitteln bestückt, gewährleistet werden.

Um die Kühlphase bei einer elektrischen Kühlbox nicht unterbrechen zu müssen und andererseits bei längeren Fahrtstrecken trotzdem einen Zugriff auf zu kühlende Getränke innerhalb der Kühlbox zu haben, wird eine derartige Kühlbox häufig auf dem Beifahrersitz platziert. Dies birgt jedoch die Gefahr, dass bei einem abrupten Bremsvorgang die Kühlbox gegen das Armaturenbrett oder möglicherweise sogar von innen gegen die Frontscheibe geschleudert wird.

In vergleichbarer Weise besteht dieses Problem auch bei der Platzierung einer Kühlbox oder eines entsprechenden Behältnisses auf einem der Rücksitze im Fond des Autos. Eine Halteeinrichtung der gattungsgemäßen Art ist aus der US 2003/0127480 A1 bekannt.

Diese bekannte Halteeinrichtung an einer tragbaren Kühlbox weist am oberen, rückwärtigen Bereich des Unterteils eine schmale Nut auf, in die das Band eines Sicherheitsgurtes gelegt werden kann. Nach Einlegen des Bandes des Sicherheitsgurtes kann dann der abklappbare Deckel dieser Kühlbox geschlossen werden.
Bei dieser bekannten Konstruktion muss daher stets für das Lösen der Kühlbox der entsprechende Deckel geöffnet werden, um den Sicherheitsgurt außer Eingriff mit der Kühlbox zu bringen. Andererseits wird bei dieser Konstruktion nicht sichergestellt, dass der Deckel auch bei schlechten Straßenverhältnissen und Erschütterungen, die sich dadurch auf die Kühlbox übertragen, stets sicher und zuverlässig geschlossen bleibt.

Aus der GB 2 285 781 A ist ein auf einen Autositz fixierbarer kleiner Tisch bekannt. Dieser Tisch weist beidseitig mehrere Hakeneinrichtungen auf, die mittels zweier gegeneinander gerichteter Haken realisiert sind, durch die zum Beispiel ein 3-Punkt-Sicherheitsgurt zur Fixierung geführt ist. Sowohl beim Fixieren dieses Tisches auf einem Autositz wie auch beim Lösen bedarf es daher etwas umständlicher Handhabungen, um den Sicherheitsgurt aus den Hakeneinrichtungen herauslösen zu können.

In der CN202480916 (U) ist ein höhenverstellbarer Kindersitz beschrieben, der mittels eines Sicherheitsgurtes auf einem Autositz fixiert werden kann. In den Armbereichen dieses Kindersitzes sind Ausnehmungen vorgesehen, durch die der Gurt des Sicherheitsgurtes geführt werden kann.

**Aufgabe** der Erfindung ist es daher, eine gattungsgemäße Halteeinrichtung an einer tragbaren Kühl- oder Wärmebox zur Fixierung auf Autositzen in kostengünstiger Weise und mit einfacher Lösbarkeit bei zuverlässigem Verschluss des Abdeckteils der Kühl- oder Wärmebox zu realisieren.

Diese Aufgabe wird bei einer gattungsgemäßen Halteeinrichtung mit den Merkmalen des kennzeichnenden Teils des Anspruchs 1 gelöst.

Ein Kerngedanke der Erfindung besteht darin, mindestens eine Führungseinrichtung für ein Flachband, ein Sicherheitsgurt oder ein Zugband an der Box vorzusehen, wobei zweckmäßigerweise der Sicherheitsgurt direkt genutzt wird und das Band des Sicherheitsgurtes relativ einfach und schnell, insbesondere über einen Einführschlitz in die Führungseinrichtung eingeführt werden kann. Die Führungseinrichtung selbst überspannt dann mindestens weitgehend die gesamte Breite des Sicherheitsgurtes oder Flachbandes, so dass eine sichere Halteeinrichtung für die entsprechende Box entsteht.

Gerade bei Boxen mit oberem Abdeckteil, welches aufklappbar oder abnehmbar ausgelegt ist, kann die Sicherheitslösung bereits dadurch realisiert werden, dass zweckmäßigerweise am vorderen Bereich des entsprechenden Deckels, insbesondere etwa mittig, die korrespondierende Führungseinrichtung vorgesehen ist.
Bei dieser Anordnung kann es bereits ausreichen, nur einen Gurt, speziell den Schultergurt, in die Führungseinrichtung einzuführen und sitzseitig am entsprechenden Schloss des Sitzes fixiert einrasten zu lassen.
Die Schrägführung des Schulter-Sicherheitsgurtes durch die vordere Führungseinrichtung am Deckel und über die weitere Strecke der Vorderseite der entsprechenden Box, stellt bereits ein zuverlässige und sichere Halterung der Box auch während der Fahrt und auch Bremsvorgängen dar.

Vorteilhafte Ausgestaltungen der Erfindung sind in den Unteransprüchen und der weiteren Beschreibung dargestellt.

Ein weiterer wesentlicher Gedanke einer Halteeinrichtung an tragbaren Boxen kann darin gesehen werden, am kastenartigen Unterteil einer entsprechenden Box, insbesondere im Bereich der beidseitigen Randbereiche der Vorderseite der Box, etwa auf mittlerer Höhe vorgesehene nach oben ausgerichtete Führungseinrichtungen anzuordnen.

In vereinfachter Form sollte bereits eine etwa im mittleren Bereich der Vorderseite der Box vorgesehene Führungseinrichtung für ein Flachband oder einen Sicherheitsgurt, der auch der bereits im Auto vorhandene Becken-Sicherheitsgurt sein kann, ausreichen, um die entsprechende Box auch gegen abrupte Bremskräfte nach vorne, sicher befestigt zu haben.

Berücksichtigt man einen 3-Punkt-Sicherheitsgurt, so kann bereits eine obere Fixierung, insbesondere eine Fixierung am Deckel, oder eine Fixierung mittels einer oder mehrerer Führungseinrichtungen am Unterteil der entsprechenden Box, insbesondere mittels eine Becken-Sicherheitsgurtes, als ausreichend sicher durchgeführt werden.

Die Führungseinrichtung kann auch als Gurthaken bezeichnet werden, da in einer bevorzugten relativ einfachen Ausführungsform zwei gegeneinander gerichtete flache Haken mit einer etwa mittig vorgesehenen Einführöffnung oder einem schräg ausgerichteten Einführschlitz ausreichend sind, um den in dieser Führungseinrichtung eingeführten Gurt oder das Flachband zuverlässig gegen ein Herausrutschen abzusichern. Die lichte Weite der Einführöffnung oder des Einführschlitzes ist dabei geringfügig größer als die Stärke des Flachbandes. Der Anlegebereich unterhalb der beiden Haken, zum Beispiel im vorderen Bereich des Deckels der Box, ist dabei geringfügig größer gehalten als die Breite des entsprechenden Flachbandes oder Sicherheitsgurtes, sodass im Wesentlichen ein Querverschieben vermieden wird.

In vorteilhafter Weise wird die aus den zwei flachen Haken bestehende Führungseinrichtung, insbesondere bei einem Deckel der entsprechenden Box, bereits integriert mit dem Deckel einstückig, zum Beispiel im Herstellungsverfahren, insbesondere im Kunststoffspritzgießverfahren, vorgesehen.

Für die Führungseinrichtung in Hakenform können aber auch anderen Anordnungen realisiert werden. Zum Beispiel kann die Auslegung mit einem horizontalen Drehbereich für einen oder beide Haken ausgestaltet sein. Auch kann eine Realisierung mittels eines Klapphakens mit gegenüberliegender Einrastung des Endbereiches vorgesehen werden. Die Haken können auch in einen Einrastbereich im Deckel oder dem Unterteil eingesetzt werden.

Anstelle eines mittigen Einführschlitzes können die Flachhaken der Führungseinrichtung etwa parallel zueinander verlaufend vorgesehen sein, so dass die Einführöffnung durch den Parallelabstand gebildet wird.

Das Vorsehen eines schrägen Einführschlitzes bei zwei gegeneinander gerichteten Haken vereinfacht einerseits den Einführvorgang für ein Flachband und stellt nach Anlegen des Flachbandes im flachen Aufnahmebereich unterhalb der beiden Haken auch sicher, dass das Flachband nicht versehentlich aus der Führungseinrichtung rutscht.

Die Erfindung wird nachfolgend anhand schematischer Darstellungen näher erläutert.

Es zeigen:
- Fig. 1:: eine mit klappbarem Deckel versehene Kühlbox an deren Deckelvorderbereich eine Führungseinrichtung für ein Flachband oder einen Sicherheitsgurt vorgesehen ist;
- Fig. 2:: einen perspektivischen Ausschnitt des Deckels der elektrischen Kühlbox nach Fig. 1 in etwas vergrößerter Darstellung der Führungseinrichtung, ohne ein entsprechendes Flachband; und
- Fig. 3:: schematisch die Darstellung einer Kühlbox nach Fig. 1 mit zwei im Randbereich des Boxenunterteils vorgesehenen Führungseinrichtungen, insbesondere für einen Becken-Sicherheitsgurt.

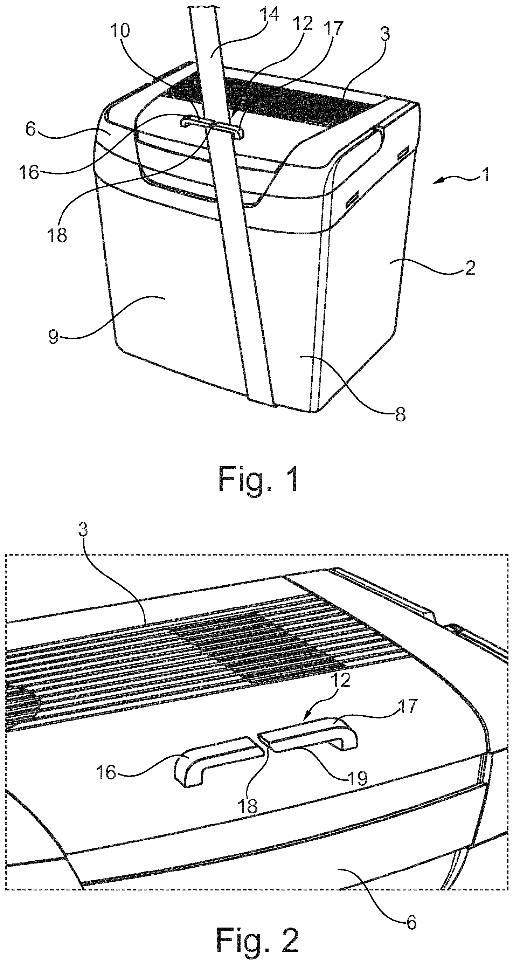

Die erfindungsgemäße Halteeinrichtung 10 an tragbaren Boxen 1 ist in den Figuren 1 bis 3 schematisch mittels zweier gegeneinander gerichteter Haken 16, 17 realisiert.

In Fig.1 ist eine elektrische Kühlbox 1 mit einem kastenartigen Unterteil 2 als Aufnahmebehältnis für zu kühlendes Gut gezeigt. Der obere Teil ist durch ein Abdeckteil 3, welches als aufklappbarer Deckel 3 ausgelegt ist abgeschlossen. Ein insgesamt etwa U-förmiger Traggriff 6 ist in horizontaler Schließlage am oberen Randbereich des Unterteils 2 vorhanden.

In Fig. 1 läuft ein Flachband 14 beziehungsweise ein Sicherheitsgurt von schräg oben nach schräg unten über die Vorderseite 9 des Unterteils 2. Der Sicherheitsgurt ist im vorderen oberen Randbereich des Deckels 3 durch die Führungseinrichtung 12 geführt und hat im gezeigten Beispiel nach Fig. 1 unterhalb des Bodens der Kühlbox 1 einen Fixierungs- beziehungsweise Einrastpunkt.

Die perspektivische Ansicht nach Fig. 2 auf den Deckel 3 der Kühlbox 1 nach Fig. 1 stellt die Führungseinrichtung 12, ohne das Flachband 14, dar.
Die Führungseinrichtung 12 weist hierbei zwei flache, gegeneinander gerichtete Haken 16 und 17 auf, die etwa mittig einen schräg verlaufenden Einführschlitz 18 haben und unterhalb der Haken gegen die Deckelfläche einen flachen Aufnahmebereich 19 bilden.
Ein Flachband 14 beziehungsweise der Gurt eines Sicherheitsgurtes kann dabei leicht durch den Einführschlitz 18 unter den Haken 17 in den flachen Aufnahmebereich 19 eingeführt werden. Aufgrund der Flexibilität des Flachbandes 14 lässt sich dieses zunächst geringfügig in der Breite zusammenschieben und anschließend auch mit der Hälfte der Breite des Flachbandes 14 unterhalb des linken Hakens 16 platzieren.

Diese Anordnungsmöglichkeit mit Flachband 14 ist in Fig. 1 im Prinzip dargestellt. Diese Halterung der Kühlbox 1 mittels einer Führungseinrichtung 12 würde bereits ausreichen, um eine sichere Halterung der Box 1 auf einem Autositz zu erreichen.

Da der Deckel 3 üblicherweise als ein Kunststoffspritzteil ausgebildet wird, ist es vorteilhaft, die Führungseinrichtung 12 mit ihren Haken 16 und 17 einstückig und integriert gleichzeitig mit dem Deckel 3 herzustellen.
Die Haken 16, 17 könnten aber auch über entsprechende im vorderen Bereich des Deckels 3 vorgesehene Rasteinsätze (nicht gezeigt) realisiert werden. Dies ermöglicht es, derart ausgebildete Haken auch nachträglich am und im Deckel anzuordnen.

Möglich ist auch eine einseitig im Deckel integriert oder verrastet angeordnete büroklammerartige Halterung, durch die das entsprechende Flachband oder der Gurt zur Fixierung der Box geführt wird.

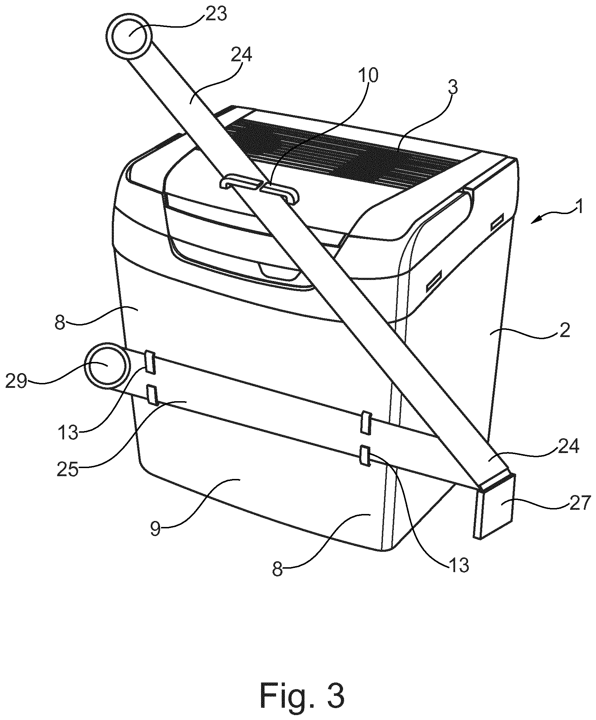

In Fig. 3 ist schematisch die Kühlbox 1 nach Fig. 1 mit zwei weiteren Führungseinrichtungen 13 im vorderen Randbereich 8 des Unterteils 2 dargestellt.
Dieses Beispiel zeigt die Absicherung der entsprechenden Kühlbox 1 mittels eines 3-Punkt-Sicherheitsgurtes. Der Schultergurt 24 ist dabei ausgehend von der oberen Aufrolleinrichtung 23 durch die Halteeinrichtung 10 schräg über die Vorderseite 2 des Deckels 3 mit Anlage im oberen, rechten Bereich der Vorderseite 9 geführt und nach unten im Schloss 27 des Sicherheitsgurtes fixiert.
Zusätzlich zeigt diese Darstellung, dass etwa in horizontaler Richtung zum Beispiel ein Becken-Sicherheitsgurt 25 durch zwei außen im Randbereich vorgesehene Führungseinrichtungen 13 geführt ist. Dieser Becken-Sicherheitsgurt 25 ist in der Darstellung im linken Bereich ausgehend von der Gurtverankerung 29 durch die beiden Führungseinrichtungen 13 auf der Vorderseite 19 geführt und rechts im Schloss 27 des Sicherheitsgurtes festgelegt.

Die in den Figuren dargestellte Kühlbox 1 kann selbstverständlich auch als Behältnis ohne Deckel 3 ausgebildet sein. Es können daher auch Behältnisse mit kisten- oder kastenartigem Aufbau mittels der erfindungsgemäßen Halteeinrichtung auf Autositzen auf einfache Weise gesichert werden, so dass eine zuverlässige lokale Halterung auch gegen abrupt einwirkende Kräfte, zum Beispiel einem starken Bremsvorgang, gewährleistet werden kann.

## Patentansprüche

1. Halteeinrichtung (10) an einer tragbaren Kühl- oder Wärmebox zur Fixierung auf Autositzen, wobei die Box (1) ein kastenartiges Unterteil (2) mit einem oberen Abdeckteil (3) aufweist, wobei mindestens eine Führungseinrichtung (12, 13) mit Einführöffnung oder Einführschlitz (18) für ein Flachband, einen Sicherheitsgurt (14) oder ein Zugband vorgesehen ist,
wobei die lichte Weite der Einführöffnung oder des Einführschlitzes (18) geringfügig größer als die Bandstärke von Flachband, Sicherheitsgurt (14) oder Zugband ist, und
wobei die Führungseinrichtung (12, 13) einen relativen flachen Aufnahmebereich (19) mit einer Breite von mindestens der Breite des Flachbandes, des Sicherheitsgurtes (14) oder des Zugbandes, aufweist,
**dadurch gekennzeichnet,**
a) **dass** die Führungseinrichtung (12) am oberen Abdeckteil (3) etwa mittig und im Bereich des vorderen Randes des Abdeckteils (3) vorgesehen ist,
b) **dass** die Führungseinrichtung (12, 13) als weitgehend geschlossene Hakeneinrichtung (16, 17) mit etwa mittigem Einführschlitz (18) oder Einführbereich (18) für ein Flachband oder das Band eines Sicherheitsgurtes (14) und
mit einem flachen Aufnahmebereich (19) mindestens von der Breite des Flachbandes oder des Sicherheitsgurtes (14) zur Fixierung auf dem Autositz vorgesehen ist,
c) **dass** die Hakeneinrichtung (16, 17) mit mindestens zwei gegeneinander gerichteten Haken (16, 17) ausgebildet ist und
**dass** zwischen den mindestens zwei Haken (16, 17) der Einführbereich (18) für ein Flachband oder den Sicherheitsgurt (14) vorgesehen ist.

2. Halteeinrichtung nach Anspruch 1,
**dadurch gekennzeichnet ,**
**dass** die gegeneinander gerichteten Haken (16, 17) eine Gerade bilden oder deren Enden etwa parallel etwas überlappen.

3. Halteeinrichtung nach einem der Ansprüche 1 bis 2,
**dadurch gekennzeichnet,**
**dass** im vorderseitigen Randbereich (8) des kastenartigen Unterteils (2), ein- oder beidseitig, insbesondere in mittlerer Höhe, eine Führungseinrichtung (13) vorgesehen ist.

4. Halteeinrichtung nach einem der Ansprüche 1 bis 3,
**dadurch gekennzeichnet,**
**dass** die Führungseinrichtung (12) am Abdeckteil (3) zur Aufnahme eines Schulter-Sicherheitsgurtes (24) und
eine Führungseinrichtung (13) am kastenartigen Unterteil (2) zur Aufnahme eines Becken-Sicherheitsgurtes (25) ausgelegt ist.

5. Halteeinrichtung nach einem der Ansprüche 1 bis 4,
**dadurch gekennzeichnet ,**
**dass** die Box (1) eine Isolierbox, insbesondere eine Kühl- oder Wärmebox ist.

6. Halteeinrichtung nach Anspruch 2,
**dadurch gekennzeichnet,**
**dass** der Einführbereich (18) zwischen den beiden Haken (16, 17) abgeschrägt in Richtung des unteren Aufnahmebereichs (19) für ein Flachband oder einen Sicherheitsgurt (14) ausgebildet ist.

7. Halteeinrichtung nach einem der Ansprüche 1 bis 6,
**dadurch gekennzeichnet,**
**dass** der oder die Haken (16, 17) der Hakeneinrichtung einstückig mit dem Abdeckteil (3) oder einer Außenschale des Unterteils (2) ausgebildet sind.

8. Halteeinrichtung nach einem der Ansprüche 1 bis 6,
**dadurch gekennzeichnet,**
**dass** die Hakeneinrichtung als klapp- und einrastbarer Haken ausgebildet ist.

9. Halteeinrichtung nach einem der Ansprüche 1 bis 6
**dadurch gekennzeichnet,**
**dass** die Haken (16, 17) als im Einrastbereich des Abdeckteils (3) oder des Unterteils (2) einsetzbare Haken ausgebildet sind.

## Claims

1. Holding device (10) on a portable coolbox or warmbox for fixing to car seats,
wherein the box (1) has a box-like lower part (2) having an upper cover part (3), wherein at least one guide device (12, 13) having an insertion opening or insertion slot (18) for a flat strap, a seatbelt (14) or a tensioning strap is provided,
wherein the internal width of the insertion opening or the insertion slot (18) is slightly greater than the strap thickness of the flat strap, seatbelt (14) or tensioning strap, and wherein the guide device (12, 13) has a relatively flat receiving region (19) the width of which is at least the same as the width of the flat strap, the seatbelt (14) or the tensioning strap,
**characterised in that**
a) the guide device (12) is provided approximately centrally on the upper cover part (3) and in the region of the front edge of the cover part (3),
b) the guide device (12, 13) is provided in the form of a largely closed hook device (16, 17) with an approximately central insertion slot (18) or insertion region (18) for a flat strap or the strap of a seatbelt (14)
and
with a flat receiving region (19) of at least the same width as the flat strap or the seatbelt (14) for fixing to the car seat,
c) the hook device (16, 17) is constructed with at least two hooks (16, 17) which are directed towards one another, and
the insertion region (18) for a flat strap or the seatbelt (14) is provided between the at least two hooks (16, 17).

2. Holding device according to claim 1,
**characterised in that**
the hooks (16, 17) which are directed towards one another form a straight line or the ends thereof overlap slightly approximately in parallel.

3. Holding device according to either one of claims 1 and 2,
**characterised in that**
in the front edge region (8) of the box-like lower part (2), a guide device (13) is provided on one or both sides, especially at mid-height.

4. Holding device according to any one of claims 1 to 3,
**characterised in that**
the guide device (12) on the cover part (3) is designed to receive a shoulder seatbelt (24) and a guide device (13) on the box-like lower part (2) is designed to receive a lap seatbelt (25).

5. Holding device according to any one of claims 1 to 4,
**characterised in that**
the box (1) is an insulated box, especially a coolbox or warmbox.

6. Holding device according to claim 2,
**characterised in that**
the insertion region (18) between the two hooks (16, 17) is slanted in the direction of the lower receiving region (19) for a flat strap or a seatbelt (14).

7. Holding device according to any one of claims 1 to 6,
**characterised in that**
the hook(s) (16, 17) of the hook device are formed integrally with the cover part (3) or with an outer shell of the lower part (2).

8. Holding device according to any one of claims 1 to 6,
**characterised in that**
the hook device is in the form of a hinged or snap-in hook.

9. Holding device according to any one of claims 1 to 6,
**characterised in that**
the hooks (16, 17) are in the form of hooks that are insertable in the snap-in region of the cover part (3) or of the lower part (2).

## Revendications

1. Dispositif de retenue (10) d'une boîte froide ou d'une boîte chaude portables pour la fixer sur un siège de voiture,
dans lequel la boîte (1) présente une partie inférieure en forme de caisson (2) avec une partie supérieure de couverture (3),
dans lequel est prévu au moins un dispositif de guidage (12, 13) avec ouverture d'introduction ou fente d'introduction (18) pour une bande plate, une ceinture de sécurité (14) ou une bande de traction,
dans lequel le diamètre intérieur de l'ouverture d'introduction ou de la fente d'introduction (18) est légèrement plus grand que l'épaisseur de bande de la bande plate, la ceinture de sécurité (14) ou la bande de traction, et
dans lequel le dispositif de guidage (12, 13) présente une zone de réception (19) relativement plate avec une largeur au moins égale à la largeur de la bande plate, de la ceinture de sécurité (14) ou de la bande de traction,
**caractérisé**
a) **en ce que** le dispositif de guidage (12) est prévu à peu près au milieu de la partie de couverture supérieure (3) et dans la zone du bord antérieur de la partie de couverture supérieure (3),
b) **en ce que** le dispositif de guidage (12, 13) est prévu en tant que dispositif d'accrochage (16, 17) essentiellement fermé avec environ au milieu une fente d'introduction (18) ou une zone d'introduction (18) pour une bande plate ou la bande d'une ceinture de sécurité (14) et
avec une zone de réception (19) plate ayant au moins la largeur de la bande plate ou de la ceinture de sécurité (14) pour la fixer au siège de voiture,
c) **en ce que** le dispositif d'accrochage (16, 17) est formé d'au moins deux crochets (16, 17) dirigés l'un vers l'autre et
**en ce qu'**entre lesdits au moins deux crochets (16, 17), la zone d'introduction (18) est prévue pour une bande plate ou la ceinture de sécurité (14).

2. Dispositif de retenue selon la revendication 1,
**caractérisé**
**en ce que** les crochets (16, 17) dirigés l'un vers l'autre forment une droite ou que leurs extrémités se chevauchent quelque peu et à peu près en parallèle.

3. Dispositif de retenue selon l'une des revendications 1 à 2,
**caractérisé**
**en ce que** dans la zone de bord du côté antérieur (8) de la partie inférieure en forme de caisson (2), d'un côté ou des deux côtés, en particulier à hauteur moyenne, est prévu un dispositif de guidage (13).

4. Dispositif de retenue selon l'une des revendications 1 à 3,
**caractérisé**
**en ce que** le dispositif de guidage (12) contre la partie de couverture (3) est conçu pour recevoir une ceinture de sécurité d'épaule (24) et
le dispositif de guidage (13) contre la partie inférieure en forme de caisson (2) est conçu pour recevoir une ceinture de sécurité sous-abdominale (25).

5. Dispositif de retenue selon l'une des revendications 1 à 4,
**caractérisé**
**en ce que** la boîte (1) est une boîte isolante, en particulier une boîte froide ou une boîte chaude.

6. Dispositif de retenue selon la revendication 2,
**caractérisé**
**en ce que** la zone d'introduction (18) entre les deux crochets (16, 17) est formée de manière chanfreinée dans la direction de la zone de réception (19) inférieure pour une bande plate ou une ceinture de sécurité (14).

7. Dispositif de retenue selon l'une des revendications 1 à 6,
**caractérisé**
**en ce que** le ou les crochet(s) (16, 17) du dispositif d'accrochage sont formés d'un seul tenant avec la partie de couverture (3) ou une coque extérieure de la partie inférieure (2).

8. Dispositif de retenue selon l'une des revendications 1 à 6,
**caractérisé**
**en ce que** le dispositif d'accrochage est formé en tant que crochet pouvant être rabattu ou encliqueté.

9. Dispositif de retenue selon l'une des revendications 1 à 6,
**caractérisé**
**en ce que** les crochets (16, 17) sont formés en tant que crochets pouvant être positionnés dans la zone d'enclenchement de la partie de couverture (3) ou de la partie inférieure (2).
